# EUROPEAN PATENT APPLICATION

(11) **EP 4 403 986 A1**
(43) Date of publication of application: **24.07.2024**
(21) Application number: 22868778.6
(22) Date of filing: 23.06.2022
(51) Int. Cl.: G02F 1/035, G02B 6/34, G02B 6/42

(54) **HYBRID PACKAGE CHIP AND OPTICAL TRANSMITTER**

(30) Priority: 18.09.2021 CN 202122278170 U
(71) Applicant: Picmore Technology (Suzhou) Ltd., Suzhou, Jiangsu 215000 (CN)
(72) Inventor: JI, Mengxi, Suzhou, Jiangsu 215000 (CN); LI, Xianyao, Suzhou, Jiangsu 215000 (CN); SUN, Yuzhou, Suzhou, Jiangsu 215000 (CN)
(74) Representative: Finnegan Europe LLP
(86) International application number: PCT/CN2022/100797
(87) International publication number: WO 2023/040401

(57) **Abstract**

The present application discloses a hybrid package chip and an optical transmitter, the hybrid package chip comprises: a first sub-chip, which comprises at least one first waveguide and at least one first electrode; and a second sub-chip, which comprises at least one second waveguide and at least one second electrode. The first waveguide is optically coupled to the corresponding second waveguide; a first electrode of the first sub-chip and a corresponding second electrode of the second sub-chip are electrically connected to one another by means of a first conductive structure, so as to receive a modulated electrical signal; and in a working state, the first sub-chip receives external input light and outputs the light by means of the first waveguide, the at least one first electrode modulates the input light so as to output modulated light, and the second waveguide receives a portion of light coupled from the first sub-chip. By using a non-bonding means, the present application improves the means by which a silicon photonic sub-chip and a thin-film lithium niobate based optoelectronic sub-chip are integrated, and reduces the difficulty of coupling between a lithium niobate waveguide and a silicon optical waveguide while reducing the difficulty of the process.

## Description

### TECHNICAL FIELD

The present application relates to the field of semiconductor chip technology and more particularly to a hybrid package chip and an optical transmitter.

### BACKGROUND ART

In an era of rapid development of information technology, integrated optics is increasingly favored in fields including optical interconnection, optical communication, and optical sensing, by virtue of its advantages such as small size, low energy consumption, and large bandwidth. In particular, silicon-based optoelectronic sub-modules (hereinafter referred to as silicon optical modules) are important in high-speed optical communication by virtue of their compatibility with conventional CMOS processes. In order to improve the modulation efficiency and bandwidth of silicon optical modules, a hybrid integrated optoelectronic chip that integrates another material on a silicon optical module has been proposed. Taking lithium niobate thin film as an example, an entire lithium niobate thin film is bonded to a silicon optical wafer; BCB (benzocyclobutene) resin or silicon dioxide is used in between to combine them by means of adhesive forces or intermolecular forces; and the coupling between a lithium niobate waveguide and a silicon optical waveguide is achieved by means of etching the lithium niobate thin film.

However, in actual manufacturing, the above means of combination has complex processes, low yield rates, and poor reliability, which leads to low production efficiency. Therefore, a pressing problem to be addressed by the industry is how to avoid complex and difficult processes, such as bonding, and reduce the difficulty of coupling between a lithium niobate waveguide and a silicon optical waveguide.

### SUMMARY OF INVENTION

### TECHNICAL PROBLEM

In view of deficiencies in prior art, embodiments of the present application provide a hybrid package chip and an optical transmitter, which reduce the difficulty of coupling between a lithium niobate waveguide and a silicon optical waveguide while reducing the difficulty of the processes, and, at the same time, is capable of effectively improving the integrity of high-speed signals.

### SOLUTION TO PROBLEM

### TECHNICAL SOLUTION

Specifically, one embodiment of the present application provides a hybrid package chip, the hybrid package chip comprising: a first sub-chip, the first sub-chip comprising at least one first waveguide and at least one first electrode; and a second sub-chip, the second sub-chip comprising at least one second waveguide and at least one second electrode; the first waveguide being optically coupled to the corresponding second waveguide; a first electrode of the first sub-chip and a corresponding second electrode of the second sub-chip being electrically connected to one another by means of a first conductive structure, so as to receive a modulated electrical signal; and in a working state, the first sub-chip receiving external input light and outputting the light by means of the first waveguide, the at least one first electrode modulating the input light so as to output modulated light, and the second waveguide receiving a portion of light coupled from the first sub-chip; wherein the first sub-chip is a lithium niobate thin film based optoelectronic sub-chip and the second sub-chip is a silicon-based silicon photonic sub-chip.

Illustratively, the first waveguide and the second waveguide are optically coupled through a grating coupler.

Illustratively, the first waveguide comprises at least a first grating coupler, the second waveguide comprises at least a second grating coupler aligned with the first grating coupler, and the second waveguide receives, through the first grating coupler and the second grating coupler, a portion of light coupled from the first sub-chip.

Illustratively, the second sub-chip further comprises a monitor photodiode, the monitor photodiode converting an optical signal received from the second grating coupler into an electrical signal and outputting the electrical signal to an external substrate.

Illustratively, there is a filler layer between the first sub-chip and the second sub-chip, so as to fixedly connect the first sub-chip and the second sub-chip.

Optionally, the filler layer covers an area where the grating couplers are located, and the effective refractive index of the filler layer matches the effective refractive index of the grating couplers.

Illustratively, the first electrode and the first waveguide are disposed side by side, the first electrode modulating light that passes through the first waveguide; the first electrode comprises a first input coupling portion and a first output coupling portion, the second electrode comprises a second input coupling portion facing the first input coupling portion and aligned with the first input coupling portion, and a second output coupling portion facing the first output coupling portion and aligned with the first output coupling portion, wherein the first input coupling portion and the second input coupling portion are used for receiving the modulated electrical signal, and the first output coupling portion and the second output coupling portion are used for returning the modulated electrical signal to the second sub-chip.

Optionally, the second sub-chip further comprises a third electrode facing the external substrate and a conductive via running through the second sub-chip, the third electrode is electrically connected to the external substrate through a second conductive structure, one end of the conductive via is electrically connected to the second conductive structure, another end of the conductive via is electrically connected to the first conductive structure.

Optionally, the second sub-chip is electrically connected to the external substrate through a conductive wire that is electrically connected to the second electrode so as to transmit an electrical signal.

Another embodiment of the present application further provides an optical transmitter, the optical transmitter comprising any of the hybrid package chips described above.

### ADVANTAGEOUS EFFECTS OF INVENTION

### ADVANTAGEOUS EFFECTS

The hybrid package chip and the optical transmitter provided by embodiments of the present application improve, by using a non-bonding means, the means by which a silicon photonic sub-chip and a thin-film lithium niobate based optoelectronic sub-chip are integrated; by means of non-bonding conductive bumps, they reduce the difficulty of the processes for manufacturing the chips and the difficulty of coupling between a lithium niobate waveguide and a silicon optical waveguide; at the same time, in a further embodiment, a structure in which a conductive bump and a conductive via work in coordination is able to avoid electromagnetic radiation interference caused by the conventional means of gold wiring, thereby ensuring signal integrity of the hybrid integrated optoelectronic chip.

### BRIEF DESCRIPTION OF DRAWINGS

### DESCRIPTION OF DRAWINGS

The following detailed description of specific embodiments of the application, in conjunction with the drawings, will make the technical solutions and other advantageous effects of the present application apparent.
FIG. 1A is a schematic diagram of an optical signal modulation principle of an optoelectronic sub-chip in a hybrid package chip provided in Embodiment 1 of the present application.
FIG. 1B is a schematic diagram of an optical signal modulation principle on one side of a silicon photonic sub-chip in the hybrid package chip provided in Embodiment 1 of the present application.
FIG. 1C is a schematic diagram of an optical signal modulation principle on another side of a silicon photonic sub-chip in the hybrid package chip provided in Embodiment 1 of the present application.
FIG. 2 is a schematic cross-sectional view of an electrical coupling structure between electrodes of the lithium niobate thin film modulator of the hybrid package chip provided by Embodiment 1 of the present application.
FIG. 3 is a schematic cross-sectional view of an grating coupling structure of the hybrid package chip provided by Embodiment 1 of the present application.
FIG. 4 is a top view of an end-face coupling structure of the optoelectronic sub-chip in the hybrid package chip provided by Embodiment 1 of the present application.
FIG. 5 is a schematic cross-sectional view of a hybrid package chip provided by Embodiment 2 of the present application.

### EMBODIMENTS OF THE INVENTION

### MODES FOR CARRYING OUT THE INVENTION

A clear and complete description of technical solutions in embodiments of the present application are provided below in conjunction with drawings in the embodiments of the present application. Obviously, the described embodiments are only some and not all embodiments of the present application. All other embodiments obtained by persons of skill in the art based on the embodiments in the present application without creative labor fall within the scope of protection of the present application.

In the specification and claims of the present application and the drawings, the terms "first," "second," "third," etc. (if present) are used to distinguish similar objects and are not necessarily used to describe a particular order or sequence. It should be understood that the objects so described are interchangeable where appropriate. In the description of the present application, "plurality" means two or more, unless otherwise defined expressly and specifically. In addition, the terms "comprise" and "has" and any variations thereof are intended to indicate open-ended inclusion. Some of the block diagrams shown in the drawings are functional entities and do not necessarily have to correspond to physically or logically independent entities. These functional entities may be implemented in a software form, or in one or more hardware circuits or integrated circuits, or in different networks and/or processor devices and/or microcontroller devices.

In the description of the present application, it needs to be noted that, unless otherwise expressly specified and defined, the terms "install," "connected," and "connect" are to be understood in a broad sense; for example, it may be a fixed connection, a detachable connection, or an integral connection; it may be a mechanical connection, an electrical connection, or in mutual communication; it may be a direct connection or an indirect connection through an intermediate medium; it may be an internal connect between two components or an interactive relationship between two components. To persons of ordinary skill in the art, the specific meaning of the above terms in the present application may be understood in their specific context.

In order to make the purpose, features, and advantages of the present application more obvious and understandable, the present application is described in further detail below in conjunction with the drawings and embodiments.

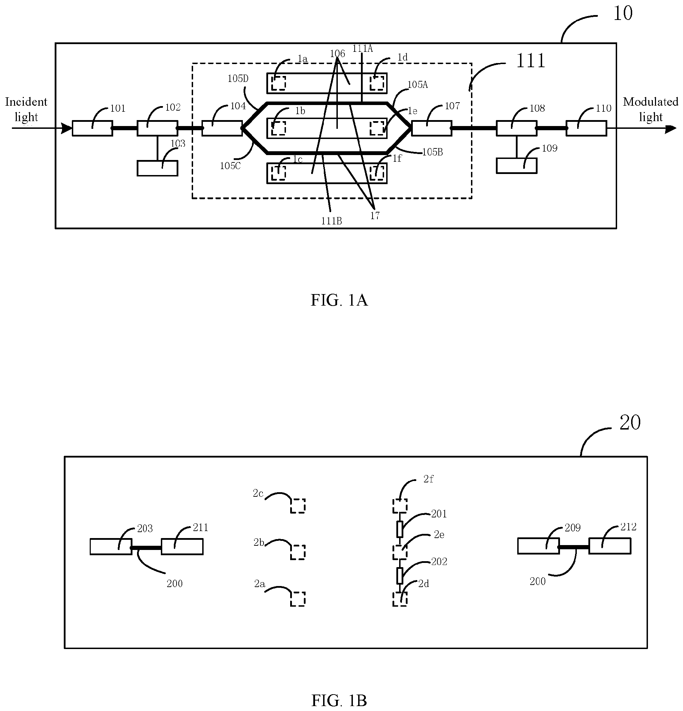

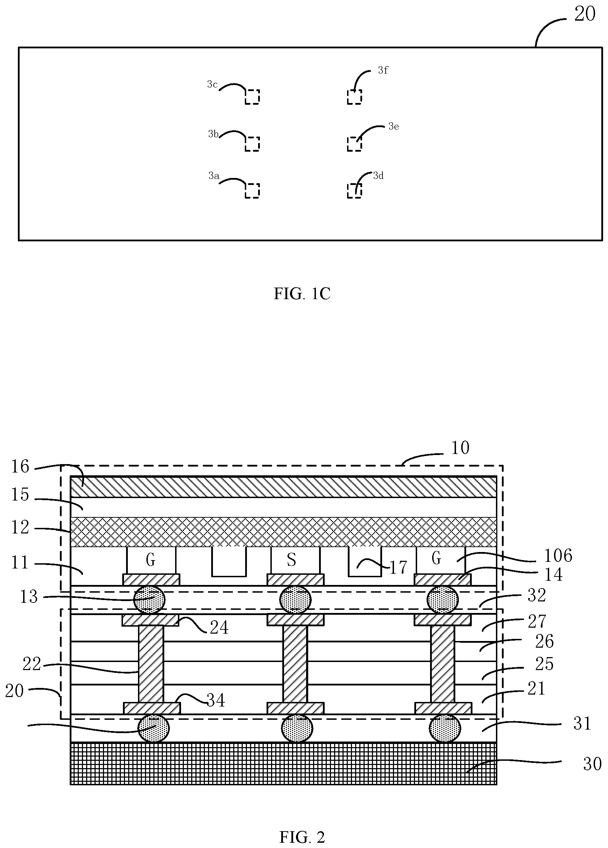

FIG. 1A is a schematic diagram of an optical signal modulation principle of an optoelectronic sub-chip in a hybrid package chip provided in Embodiment 1 of the present application; FIG. 1B is a schematic diagram of an optical signal modulation principle on one side of a silicon photonic sub-chip in the hybrid package chip provided in Embodiment 1 of the present application; and FIG. 1C is a schematic diagram of an optical signal modulation principle on another side of the silicon photonic sub-chip in the hybrid package chip provided in Embodiment 1 of the present application. The hybrid package chip proposed by this embodiment comprises a silicon photonic sub-chip (i.e. a second sub-chip) 20 and an optoelectronic sub-chip (i.e. a first sub-chip) 10 integrated on the silicon photonic sub-chip 20. In this embodiment, the main material of the silicon photonic sub-chip 20 is different from the main material of the optoelectronic sub-chip 10; for example, the silicon photonic sub-chip 20 is mainly made of a silicon material; illustratively, the optoelectronic sub-chip 10 is mainly made of a lithium niobate material, and the optoelectronic sub-chip 10 comprises a lithium niobate thin film modulator to modulate an incident optical signal. A description is provided below using an example where a thin-film lithium niobate based optoelectronic sub-chip 10 is integrated on the silicon photonic sub-chip 20.

The optical signal modulation principle of the hybrid package chip provided in Embodiment 1 of the present application is described below in conjunction with FIG. 1A, FIG. 1B, and FIG. 1C.

As shown in FIG. 1A, an optoelectronic sub-chip 10 provided in Embodiment 1 of the present application comprises a first end-face coupler 101, a first directional coupler 102, a first lithium niobate grating coupler 103, a beam splitter 104, a first waveguide 17, a beam combiner 107, a second directional coupler 108, a second lithium niobate grating coupler 109, and a second end-face coupler 110. Here, input light from a laser is coupled to an optical fiber array via the first end-face coupler 101 of the thin-film lithium niobate based optoelectronic module 10, and enters into the first waveguide 17 of a lithium niobate waveguide layer (as illustrated by bold solid lines in FIG. 1A). Here, the first waveguide 17 comprises two modulation area waveguide sections (111A and 111B), and non-modulation area waveguide sections on two ends (e.g. 105A, 105B, 105C, 105D, etc.). The input light that has entered the first waveguide 17 is evenly split, upon passing through the beam splitter 104, into two beams of light of equal intensity, which enter two arms of a lithium niobate thin film modulator 111 (i.e. the modulation area waveguides 111A and 111B). In this embodiment, taking a Mach-Zehnder modulator (MZM) as an example, electro-optic modulation is performed on the input light, wherein a modulated electrical signal comes from a substrate 30 (shown in FIG. 2), the substrate 30 being used for carrying the silicon photonic sub-chip 20 and optoelectronic sub-chip 10 and for transmitting the modulated electrical signal inputted externally to the silicon photonic sub-chip 20 through a conductor wire and an electrode; this modulated electrical signal is subsequently transmitted via the silicon photonic sub-chip 20 shown in FIG. 1B to a first electrode 106 of the thin-film lithium niobate based optoelectronic sub-chip 10, so as to form an electric field on the lithium niobate waveguide layer, thereby impacting the effective refractive index of the modulation area waveguide sections (111A and 111B). When the two beams of light pass through the modulation area waveguide sections (111A and 111B), cumulative phase change will result, thereby accomplishing modulation of the input light. A specific description of the means of transmission for the above-mentioned modulated electrical signal is elaborated below in detail in reference to FIG. 2.

Illustratively, before passing through the beam splitter 104, the input light is split into two portions by the first directional coupler 102; the portion having more energy (e.g. 95% of the light) is inputed into the beam splitter 104 and then undergoes further modulation as described above; the portion having less energy (e.g. 5% of the light) is coupled to a first silicon optical grating coupler 203 disposed in a second waveguide 200 (as illustrated by bold solid lines in FIG. 1B) on the silicon photonic sub-chip 20 by the first lithium niobate grating coupler 103 disposed in the first waveguide 17, and subsequently enters into a first monitor photodiode (MPD) 211 on the silicon photonic sub-chip 20, thereby converting a portion of the input light to an electrical signal and outputting it to the substrate 30 (shown in FIG. 2) to implement monitoring operations, as shown in FIG. 1B. The substrate 30 may be a printed circuit board (PCB), which serves as a carrier for electrical connection between electronic components. Similarly, after the electro-optic modulation completes, modulated optical signals are combined into one beam upon passing through the beam combiner 107, the one beam enters the second directional coupler 108 and is split into two by the second directional coupler 108; the portion having more energy (e.g. 95% of the light) is outputted to an optical fiber array through the second end-face coupler 110; the portion having less energy (e.g. 5% of the light) is coupled to a second silicon optical grating coupler 209 disposed in the second waveguide 200 of the silicon photonic sub-chip 20 by the second lithium niobate grating coupler 109 disposed in the first waveguide 17 of the thin-film lithium niobate based optoelectronic sub-chip 10, and enters a second monitor photodiode 212 on the silicon photonic sub-chip 20, thereby converting a portion of the modulated light to an electrical signal and outputting it to the substrate to implement monitoring operations; the electrical signals outputted from the first monitor photodiode 211 and the second monitor photodiode 212 can be used for MZM work point feedback.

FIG. 2 is a schematic cross-sectional view of an electrical coupling structure between electrodes of the lithium niobate thin film modulator of the hybrid package chip provided by Embodiment 1 of the present application. A detailed description is provided below in conjunction with FIGs. 1A, 1B, 1C, and 2.

In this embodiment, the thin-film lithium niobate based optoelectronic sub-chip 10 comprises, stacked in a top-to-bottom order, a first substrate layer 16 (e.g. a silicon substrate), a first silicon dioxide layer 15, a first covering layer 12, and a lithium niobate waveguide layer 11, the lithium niobate waveguide layer 11 having disposed in it a first electrode 106 (e.g. a GSG electrode, or possibly a GSSG electrode or a GS electrode in other embodiments) and a first waveguide 17, wherein the first electrode 106 comprises a signal electrode (S) and two ground electrodes (G). The first waveguide 17 shown in FIG. 2 is modulation area waveguide sections, i.e., the two modulation arms 111A and 111B in FIG. 1A. The thin-film lithium niobate based optoelectronic sub-chip 10 further comprises a first conductive structure electrically connected to the silicon photonic sub-chip 20. The first conductive structure is composed of a first solder pads 14 at an electrical coupling area of the first electrode 106 and a first conductive bumps 13 electrically connected to the first solder pads 14. As shown in FIG. 1A, the electrical coupling area comprises first input coupling portions 1a, 1b, and 1c located at one end of the first electrode 106, and first output coupling portions 1d, 1e, and 1f located at another end of the first electrode 106. Each of the input coupling portions and each of the output coupling portions has a corresponding solder pad, and each solder pad corresponds to a conductive bump, which is used for electrical connection with other members.

As shown in FIG. 2, the silicon photonic sub-chip 20 comprises, stacked in a bottom-to-top order, a second substrate layer 21 (e.g. a silicon substrate), a second silicon dioxide layer 25, a second covering layer 26, and a silicon waveguide layer 27; and second electrodes (2a, 2b, 2c, 2d, 2e, and 2f shown in FIG. 1B) are disposed in the silicon waveguide layer 27. Referring to FIGs. 1A and 1B again, the second electrodes (2a, 2b, 2c, 2d, 2e, and 2f shown in FIG. 1B) comprise second input coupling portions (2a, 2b, and 2c) facing the first input coupling portions and aligned with the first input coupling portions, and second output coupling portions (2d, 2e, and 2f) facing the first output coupling portions and aligned with the first output coupling portions; here, the first input coupling portions and the second input coupling portions are used for receiving the modulated electrical signal inputted to the thin-film lithium niobate based optoelectronic sub-chip 10, and the first output coupling portions and the second output coupling portions are used for returning the modulated electrical signal to the silicon photonic sub-chip 20 so as to form a loop. Illustratively, the second input coupling portions and the second output coupling portions of the second electrodes are second solder pads 24 corresponding to the first conductive bumps 13, and the second solder pads 24 are electrically connected to the first conductive bumps 13. Additionally, the silicon photonic sub-chip 20 further comprises terminal matching resistors 201 and 202 connected in series to the second output coupling portions 2d, 2e, and 2f.

As shown in FIG. 1C, the silicon photonic sub-chip 20 further comprises third electrodes (3a, 3b, 3c, 3d, 3e, and 3f) facing the substrate 30 and disposed on a backside of the second substrate layer 21. As shown in FIG. 2, the silicon photonic sub-chip 20 further comprises conductive vias 22 running through the silicon photonic sub-chip 20, the third electrodes are electrically connected to the external substrate 30 through a second conductive structure (the second conductive structure is composed of third solder pads 34 respectively located at the third input coupling portion and third output coupling portion, and of second conductive bumps 23 electrically connected to the third solder pads 34), one end of the conductive vias 22 is electrically connected to the second conductive structure, another end of the conductive vias 22 is electrically connected to the first conductive structure. Here, the third electrodes comprise third input coupling portions (3a, 3b, and 3c) and third output coupling portions (3d, 3e, and 3f), the third input coupling portions are used for receiving the modulated electrical signal inputted to the silicon photonic sub-chip 20, and the third output coupling portions are used for outputting an electrical signal to the substrate 30. Here, the second solder pads 24 and the third solder pads 34 disposed on the silicon photonic sub-chip 20 are respectively electrically connected to the conductive vias 22. Illustratively, the third input coupling portions and the third output coupling portions of the third electrodes are the third solder pads 34 electrically connected to the second conductive bumps 23. Although FIG. 2 illustratively shows a relationship of locations of the second solder pads 24 and the third solder pads 34 relative to locations of the conductive vias 22, it should be understood that the conductive vias 22 do not necessarily align with the second solder pads 24 and the third solder pads 34.

Illustratively, the conductive vias 22 may be made with an TSV (through silicon via) process; the conductive vias 22 are filled with a conductive material, such as copper or another metal; the TSV vias run through the silicon optical module 20, thereby enabling electrical connection to the substrate 30 and the thin-film lithium niobate based optoelectronic sub-chip 10 and allowing a higher chip stacking density.

Additionally, the first conductive bumps 13 and the second conductive bumps 23 may be copper pillar bumps, or bumps made in top-layer metal solder pad opening; the present application does not impose any limitation in this respect.

Illustratively, in the embodiment shown in FIG. 2, the hybrid package chip further comprises a first filler layer 32 and a second filler layer 31 located between the thin-film lithium niobate based optoelectronic sub-chip 10 and the silicon photonic sub-chip 20 and between the silicon photonic sub-chip 20 and the substrate 30, so as to fix stacked modules. The first filler layer 32 has disposed in it the first conductive bumps 13; the second filler layer 31 has disposed in it the second conductive bumps 23. Here, the first filler layer 32 does not cover an area where the grating couplers are located. Optionally, the first filler layer 32 covers the area where the grating couplers are located, and the effective refractive index of the first filler layer 32 matches the effective refractive index of the grating couplers.

Illustratively, in this embodiment, the first electrode 106 (e.g., a GSG electrode) on the thin-film lithium niobate based optoelectronic sub-chip 10 is electrically connected to the silicon photonic sub-chip 20 through first conductive bumps 13, and the silicon photonic sub-chip 20 is electrically connected to the substrate 30 through the second conductive bumps 23. Therefore, the modulated electrical signal used for electro-optic modulation first enters the silicon photonic sub-chip 20 from the substrate 30 through the second conductive bumps 23; it then flows into an input electrical coupling area of the first electrode 106 of the thin-film lithium niobate based optoelectronic sub-chip 10 through the conductive vias 22 of the silicon photonic sub-chip 20 by way of the first conductive bumps 13, so as to drive optoelectronic modulation; finally, it returns into the silicon photonic sub-chip 20 through an output electrical coupling area of the thin-film lithium niobate based optoelectronic sub-chip 10, and is then terminated by the terminal matching resistors 201 and 202 on the silicon photonic sub-chip 20.

As can be learned from above, in this embodiment, the thin-film lithium niobate based optoelectronic sub-chip 10 is electrically connected to the silicon photonic sub-chip 20 by means of flip chip packaging. Specifically, the first solder pads 14 are made on a frontside electrical coupling area of the thin-film lithium niobate based optoelectronic sub-chip 10, which is electrically connected, through the first conductive bumps 13 disposed on the first solder pads 14, to the second solder pads 24 on a frontside electrical coupling area of the silicon photonic sub-chip 20, thereby realizing non-bonding integration between the thin-film lithium niobate based optoelectronic sub-chip 10 and the silicon photonic sub-chip 20. Additionally, by making vertical vias between modules using an TSV packaging technology, electrical interconnection between the sub-chips and the substrate can be realized, and the impact of electromagnetic interference on the bandwidth is mitigated, ensuring signal integrity of the hybrid integrated optoelectronic chip.

It should be understood that FIGs. 1A, 1B, 1C, and 2 only show portions of a hybrid package chip; a complete hybrid integrated optoelectronic chip may also integrate other waveguides and electrodes, as well as other active and passive components.

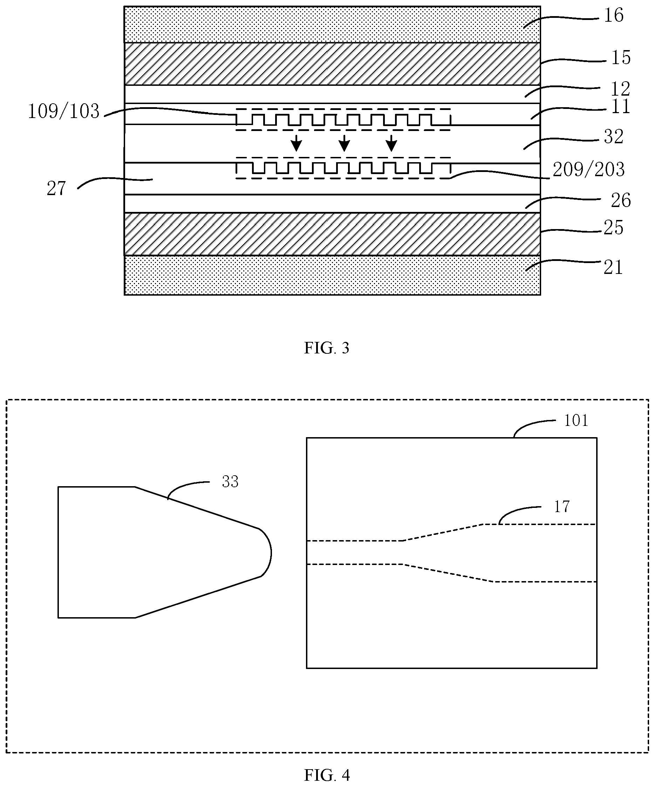

FIG. 3 is a schematic cross-sectional view of an grating coupling structure of the hybrid package chip provided by Embodiment 1 of the present application. The grating coupling structure comprises a first grating coupling structure composed of the first lithium niobate grating coupler 103 and the first silicon optical grating coupler 203, and/or a second grating coupling structure composed of the second lithium niobate grating coupler 109 and the second silicon optical grating coupler 209, shown in FIGs. 1A and 1B.

As shown in FIG. 3, taking the second grating coupling structure composed of the second lithium niobate grating coupler 109 and the second silicon optical grating coupler 209 as an example, the thin-film lithium niobate based optoelectronic sub-chip 10 comprises, stacked in a top-to-bottom order, the first substrate layer 16 (e.g., a silicon substrate), the first silicon dioxide layer 15, the first covering layer 12, and the lithium niobate waveguide layer 11. The first waveguide 17 is disposed in the lithium niobate waveguide layer 11; here, the first waveguide 17 is a non-modulation area waveguide section, and the first waveguide 17 comprises the second lithium niobate grating coupler 109. Correspondingly, the silicon photonic sub-chip 20 comprises, stacked in a bottom-to-top order, a second substrate layer 21, a second silicon dioxide layer 25, a second covering layer 26, and a silicon waveguide layer 27; the second waveguide 200 is disposed in the silicon waveguide layer 27 (as shown in FIG. 1B); and the second waveguide 200 comprises the second silicon optical grating coupler 209. Illustratively, outside of the area where the grating couplers are located, the hybrid package chip further comprises the first filler layer 32 between the thin-film lithium niobate based optoelectronic sub-chip 10 and the silicon photonic sub-chip 20. Optionally, the first filler layer 32 covers the area where the grating couplers are located, and the effective refractive index of the first filler layer 32 matches the effective refractive index of the grating couplers.

In this embodiment, since the grating coupling structure composed of the second lithium niobate grating coupler 109 and the second silicon optical grating coupler 209 is used only for optical coupling of the MPD, coupling efficiency is subject to lower requirements; at the same time, the grating coupling structure is able to enlarge an originally small mode spot in the waveguide to a large mode spot by means of optical diffraction, thereby realizing optical fiber mode matching and making coupling more convenient; meanwhile, as the mode spot is enlarged, alignment precision is subject to lower requirements, thus reducing the difficulty for coupling.

FIG. 4 is a top view of an end-face coupling structure of the optoelectronic sub-chip in the hybrid package chip provided by Embodiment 1 of the present application. The end-face coupling structure is the first end-face coupler 101 and/or the second end-face coupler 110 shown in FIG. 1A, and both inputting of light to be modulated and outputting of a modulated optical signal are realized by means of coupling between the above end-face coupler and the optical fiber array; the coupling efficiency is relatively high, which can reduce losses along the entire optical path. A detailed description is provided below, using only the first end-face coupler 101 as an example, in conjunction with FIGs. 1A through 3.

The first end-face coupler 101 comprises the first waveguide 17 located in the lithium niobate waveguide layer 11, and the first silicon dioxide layer 15 and the first substrate layer 16 located above the lithium niobate waveguide layer 11 (as shown in FIG. 2). The first waveguide 17 has a section that is a tapered waveguide, and couples to an external optic fiber 33 through this tapered waveguide, thereby gradually transitioning an optical mode into the first waveguide 17. By means of coupling between the optical fiber array and the lithium niobate waveguide end-face, inputting and outputting of a main light source can be realized, and optical path losses can be reduced.

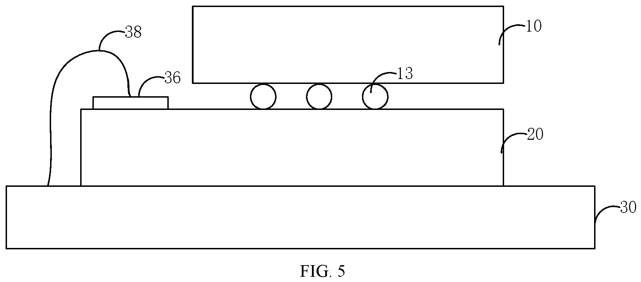

FIG. 5 is a schematic cross-sectional view of a hybrid package chip provided by Embodiment 2 of the present application. Embodiment 2 differs from Embodiment 1 in that the conductive vias are replaced by wire solder pads disposed on the silicon photonic sub-chip. In the present embodiment, the hybrid package chip has, stacked in a bottom-to-top order, a silicon photonic sub-chip 20, a wire solder pad 36 disposed on a surface of the silicon photonic sub-chip 20 and electrically connected to a second electrode (not shown in the figure) of the silicon photonic sub-chip 20, conductive bumps 13 disposed at a surface of the silicon photonic sub-chip 20, and a thin-film lithium niobate based optoelectronic sub-chip 10 electrically connected to the silicon photonic sub-chip 20 through the conductive bumps 13. In the present embodiment, the wire solder pad 36 is electrically connected to a substrate 30 by a conductive wire 38, e.g. a gold wire, so as to transmit an electrical signal. It should be understood that the second electrode may comprise an electrode aligned with a modulating electrode (e.g., a GSG electrode) that forms an electric field on a first waveguide of the thin-film lithium niobate based optoelectronic sub-chip 10, and it may also comprise another electrode used for electrical connection with an external power source.

The structure of the hybrid integrated optoelectronic chip shown above in Embodiment 2 improves, by using a non-bonding means, the means by which the silicon photonic sub-chip and the thin-film lithium niobate based optoelectronic sub-chip are integrated, and enables electrical connection through the conductive bumps between the two sub-chips, so as to reduce the difficulty of the manufacturing process.

The present application further discloses an optical transmitter, the optical transmitter comprising any of the hybrid package chips described above.

The hybrid package chip and optical transmitter provided by embodiments of the present application are described in detail above, and specific examples are used herein to explain the principles and implementation of the present application; the description of the above embodiments is only used to assist in the understanding of the technical solutions and core ideas of the present application; persons of ordinary skill in the art should understand that it is still possible for them to modify the technical solutions documented in the above embodiments or to make equivalent substitutions for some of the technical features therein; however, these modifications or substitutions do not cause the essence of the corresponding technical solutions to depart from the scope of the technical solutions of embodiments of the present application.

## Claims

1. An hybrid package chip, **characterized in that** it comprises:
a first sub-chip, the first sub-chip comprising at least one first waveguide and at least one first electrode;
and a second sub-chip, the second sub-chip comprising at least one second waveguide and at least one second electrode;
the first waveguide being optically coupled to the corresponding second waveguide;
a first electrode of the first sub-chip and a corresponding second electrode of the second sub-chip being electrically connected to one another by means of a first conductive structure, so as to receive a modulated electrical signal;
and in a working state, the first sub-chip receiving external input light and outputting the light by means of the first waveguide, the at least one first electrode modulating the input light so as to output modulated light, and the second waveguide receiving a portion of light coupled from the first sub-chip;
wherein the first sub-chip is a lithium niobate thin film based optoelectronic sub-chip and the second sub-chip is a silicon-based silicon photonic sub-chip.

2. The hybrid package chip according to claim 1, **characterized in that** the first waveguide and the second waveguide are optically coupled through a grating coupler.

3. The hybrid package chip according to claim 2, **characterized in that** the first waveguide comprises at least a first grating coupler, the second waveguide comprises at least a second grating coupler aligned with the first grating coupler, and the second waveguide receives, through the first grating coupler and the second grating coupler, a portion of light coupled from the first sub-chip.

4. The hybrid package chip according to claim 3, **characterized in that** the second sub-chip further comprises a monitor photodiode, the monitor photodiode converting an optical signal received from the second grating coupler into an electrical signal and outputting the electrical signal to an external substrate.

5. The hybrid package chip according to claim 1, **characterized in that** there is a filler layer between the first sub-chip and the second sub-chip, so as to fixedly connect the first sub-chip and the second sub-chip.

6. The hybrid package chip according to claim 5, **characterized in that** the filler layer covers an area where the grating couplers are located, and the effective refractive index of the filler layer matches the effective refractive index of the grating couplers.

7. The hybrid package chip according to claim 5, **characterized in that** the first electrode and the first waveguide are disposed side by side, the first electrode modulating light that passes through the first waveguide; the first electrode comprises a first input coupling portion and a first output coupling portion, the second electrode comprises a second input coupling portion facing the first input coupling portion and aligned with the first input coupling portion, and a second output coupling portion facing the first output coupling portion and aligned with the first output coupling portion, wherein the first input coupling portion and the second input coupling portion are used for receiving the modulated electrical signal, and the first output coupling portion and the second output coupling portion are used for returning the modulated electrical signal to the second sub-chip.

8. The hybrid package chip according to claim 7, **characterized in that** the second sub-chip further comprises a third electrode facing the external substrate and a conductive via running through the second sub-chip, the third electrode is electrically connected to the external substrate through a second conductive structure, one end of the conductive via is electrically connected to the second conductive structure, another end of the conductive via is electrically connected to the first conductive structure.

9. The hybrid package chip according to claim 5, **characterized in that** the second sub-chip is electrically connected to the external substrate through a conductive wire that is electrically connected to the second electrode so as to transmit an electrical signal.

10. An optical transmitter, **characterized in that** the optical transmitter comprises the hybrid package chip according to any one of claims 1 through 9.
